# EUROPEAN PATENT APPLICATION

(11) **EP 4 224 608 A1**
(43) Date of publication of application: **09.08.2023**
(21) Application number: 22155100.5
(22) Date of filing: 04.02.2022
(51) Int. Cl.: H01M 50/325, H01M 50/342, H01M 50/383, H01M 50/209

(54) **BATTERY ARRANGEMENT AND BATTERY CELL**

(71) Applicant: ABB SCHWEIZ AG, 5400 Baden (CH)
(72) Inventor: SCHULER, Gabriel, 6415 Arth (CH); HE, Minglong, 5400 Baden (CH); TROENDLE, Pirmin, 79761 Waldshut-Tiengen (DE)
(74) Representative: Qip Patentanwälte Dr. Kuehn & Partner mbB

(57) **Abstract**

A battery arrangement is provided. The battery arrangement comprises at least one battery cell (20) comprising at least two electrical terminals (30, 32) and a cell housing (21); and at least one overpressure sensor comprising a flexible element (42, 52, 54) being formed and/or arranged at the cell housing (21), and a switch (44) being arranged outside of the cell housing (21) and being coupled or couplable to the flexible element (42, 52, 54), wherein the overpressure sensor and the flexible element (42, 52, 54) are formed and arranged such that the flexible element (42, 52, 54) is deformed by a gas overpressure within the battery cell (20) and that the flexible element (42, 52, 54) activates the switch (44) when a predetermined overpressure within the battery cell (20) is reached or exceeded.

## Description

### FIELD OF THE INVENTION

The invention relates to the field of battery cells and battery arrangements comprising at least one battery cell. In particular, the invention relates to a battery cell comprising an overpressure safety element, and a battery arrangement comprising at least one battery cell with an overpressure safety element.

### BACKGROUND OF THE INVENTION

An increasing number of vehicles, e.g. cars, trains, subways, busses, is equipped with high-performance battery cells. A typical high-performance battery cell may have a nominal capacity between 1 Ah and 1000 Ah and may be used for driving the corresponding vehicle, in particular for providing a power train of the corresponding vehicle with energy. Conventional high-performance battery cells may be fully assembled and encapsulated in modules. Then, the modules may be combined and encapsulated as battery packages.

The battery cells, in particular the high-performance battery cells, comprise e.g. lithiumion cells and sodium-ion cells. The Li-ion cells may fail in non-energetic and energetic modes. Non-energetic cell failures, which show no thermal runway but cause the permanent or irreversible damage to the cell, may mainly affect the reliability of the battery. Non-energetic failures may include capacity fading, internal resistance increase, cell swelling, electrolyte leakage and the consequent cell dry-out. Sometimes, in a later stage in time, non-energetic failures may be associated with not only the cell ageing process but also the root cause of later energetic failures. Energetic cell failures may be associated with a selfsustaining exothermic reaction within the cell, e.g. leading to thermal runaway.

The thermal runaway of batteries may represent a significant safety bottleneck of today's cell chemistries. In particular, the thermal runaway may be the safety critical point of a battery storage system. A safe handling of thermal runaway events and a subsequent limitation of the influenced area as well as limiting a further propagation of the chemicals within the battery modules and/or battery packs may be a key for a safe and reliable battery storage system. The general trend towards larger battery cells, a higher storage capacity, and/or an increasing cell energy density, as well as in generally larger storage systems may increase the need for a safe handling of the thermal runaway events.

The safe handling, a shielding of the battery cells and/or an early detection of a thermal runaway and/or triggering of one or more safety measures may be one key to avoid a propagation of chemicals from one of the battery cells to neighboring battery cells and/or from battery module to battery module within an overall battery pack or battery system.

The state of the art cell designs include vent openings for discharging safely an internal gas overpressure of the corresponding battery cell- and current interrupting devices for cylindrical or prismatic formats of the battery cells.

### DESCRIPTION OF THE INVENTION

Therefore, it is an objective of the present invention to provide a battery arrangement which may enable to detect and/or handle a thermal runaway event of a battery cell of the battery arrangement in an easy and/or efficient way.

Further, it is an objective of the present invention to provide a battery cell which may enable to detect and/or handle a thermal runaway event of a battery cell of the battery arrangement in an easy and/or efficient way.

These objectives are achieved by the subject-matter of the independent claims. Further exemplary embodiments are evident from the dependent claims and the following description.

In particular, an objective of the present invention is achieved by a battery arrangement, comprising at least one battery cell comprising at least two electrical terminals and a cell housing; and at least one overpressure sensor comprising a flexible element being arranged at the cell housing, and a switch being arranged outside of the cell housing and being coupled or couplable to the flexible element, wherein the switch and the flexible element are formed and arranged such that the flexible element is deformed by a gas overpressure within the battery cell and that the flexible element activates the switch when a predetermined overpressure within the battery cell is reached or exceeded. The overpressure sensor may be generalised and/or referred to as overpressure safety element.

The overpressure safety element, in particular the overpressure sensor comprising the flexible element and the switch, enables to detect and/or handle a thermal runaway event of a battery cell of the battery arrangement in an easy and/or efficient way. In general, the thermal runaway event of the battery cell of the battery arrangement may be detected and/or handled by the overpressure safety element representing an indicative cell hull feature allowing to safely handle the thermal runaway and to avoid thermal runaway propagation within battery modules or entire battery packs/system. In particular, an overproportional cell gassing and thermal runaway detection may be detected by the flexible element and the corresponding switch. The flexible element may be bulged out to the switch to trigger the safety measure, e.g. a safety shut-off signal for the device being supplied with energy by the battery arrangement in case of the internal gas pressure increase. This may allow for an early ageing detection as well as the thermal runaway induced safety shut-off The overpressure safety element may be configured such that the safety measure is triggered before the battery cell, the battery arrangement, and/or the device supplied with energy by the battery cell is severly damaged.

The battery cell may be a high-performance battery cell having a nominal capacity between 1 Ah and 1000 Ah. The nominal capacity may be between 20 Ah and 500 Ah, e.g. between 25 Ah and 100 Ah. The electrical terminals may be arranged at the same or opposing sides of the cell body. The electrical terminals may correspond to the poles of the battery cell. For example, one of the electrical terminals may correspond to the plus-pole and the other one of the electrical terminals may correspond to the minus-pole of the battery cell. The cell body may have a prismatic shape. For example, the cell body may have a cuboid shape. The switch may comprise a glued or sticked sensor with a pressure sensitive and/or conductive layer between two signal lines. Then, the switch may be activated in case of a flattening of the middle pressure sensitive and/or conductive layer to short the signal lines.

According to an embodiment, the cell housing may have at least one through-recess, wherein the flexible element may tightly cover the through-recess.

According to an embodiment, the flexible element comprises or consists of a flexible membrane. The flexible membrane may be gas tightly arranged at a rim of the through-recess. When the internal gas pressure increases, the flexible membrane is bulged out towards the switch. The flexible membrane may be configured for being bulged out by the internal gas pressure such that the flexible membrane activates the switch when the predetermined gas pressure is reached or exceeded.

According to an embodiment, the flexible element comprises or consists of bellows and a cap. The bellows may be tightly coupled to the cell housing and surround the through-recess. The cap may be tightly coupled to the bellows at an end of the bellows facing away from the cell housing. The bellows and the cap may be configured for being stretched by the internal gas pressure such that the cap activates the switch when the predetermined gas pressure is reached or exceeded.

As an alternative to the through-recess and the flexible membrane, or the through-recess and the bellows and the cap, the flexible element may comprise or consist of a thinned and/or stamped portion of the cell housing. The thinned and/or stamped portion may be configured for being bulged out if the predetermined gas pressure within the cell housing is reached or exceeded.

According to an embodiment, the switch is configured for generating a safety signal when the switch is activated.

According to an embodiment, the battery arrangement comprises a controller which is communicatively coupled to the switch and which is configured for activating at least one safety measure when receiving the safety signal from the switch. The switch may be coupled to the controller via one or more electric lines. The safety measure may e.g. comprise a shutdown of the device supplied with energy by the battery cell and/or electrically separating the battery cell from the device and/or from other battery cells, if any.

An objective of the present invention is achieved by a battery cell, comprising at least two electrical terminals; a cell housing having at least two through-recesses; at least two overpressure safety elements, one of them for each of the two through-recesses, wherein each of the overpressure safety elements is configured for activating at least one safety measure when a predetermined overpressure is reached within the cell housing and wherein the safety measures are different from each other.

The above features, advantages and/or effects of the battery arrangement may be transferred to the above battery cell. Therefore, a repetition of these features, advantages and/or effects is omitted and it is referred to the above explanations only in order to provide a concise description.

For example, large prismatic or pouch cells may represent a very high safety risk and/or may require a very high amount of vent gas. The above battery cell comprising at least two overpressure safety elements triggering at least two different safety measures may provide sufficient safety even for those large prismatic or pouch cells.

According to an embodiment, at least one of the overpressure safety elements comprises or consists of a first burst disc tightly covering the corresponding through-recess and being configured for bursting when the predetermined gas pressure is reached or exceeded such that the gas is released through the bursted first burst disc. The safety element comprising or consisting of the first burst disc may be referred to as vent of the battery cell.

According to an embodiment, at least one of the overpressure safety elements comprises or consists of a second burst disc and an extinguishing line comprising an extinguishing agent, wherein the second burst disc is configured for bursting when the predetermined gas pressure is reached or exceeded such that the extinguishing agent is able to enter the battery cell through the bursted second burst disc. The bursting of the burst disc may trigger an opening of the extinguishing line and may allow the extinguishing agent to enter the cell housing. The main functions of the extinguishing agent may be fire extinguishing and safe transport of thermal runaway heat by evaporative cooling of the corresponding fluid.

If the first and second burst disc are arranged, the gas may be released from the battery cell through the first burst disc and the extinguishing agent may enter the battery cell through the second burst disc, optionally simultaneously. Whether the first or the second burst disc bursts first may be configured by choosing the material, size and/or pre-tension for the burst discs. When the burst discs are configured for bursting simultaneously, i.e. at the same predetermined gas pressure, the gas exiting through the first burst disc may not influence the extinguishing agent intruding through the second burst disc. In this context it may be advantageous if the first and second burst discs are arranged on different sides of the cell housing and/or at different heights at the cell housing.

According to an embodiment, at least one of the overpressure safety elements may comprise or consist of an overpressure sensor comprising a flexible element being arranged at the cell housing and tightly covering the through-recess.

If the first or second burst disc, and the flexible element are arranged, the safety measure may be triggered before the gas may be released from the battery cell through the first burst disc and/or before the extinguishing agent may enter the battery cell through the second burst disc. In this case, the overpressure safety element may be configured such that the safety measure is triggered before the battery cell, the battery arrangement, and/or the device supplied with energy by the battery cell is severly damaged. If the safety measure is triggered and the overpressure still increases, the first and/or second burst disc may burst to prevent even more damage.

According to an embodiment, the flexible element comprises or consists of the flexible membrane.

According to an embodiment, the flexible element comprises or consists of the bellows and the cap, wherein the bellows are tightly coupled to the cell housing and surround the through-recess and wherein the cap is tightly coupled to the bellows at an end of the bellows facing away from the cell housing.

An objective of the present invention is achieved by a battery arrangement, comprising at least one of the above battery cells; and the switch being arranged outside of the cell housing and being coupled or couplable to the flexible element, wherein the overpressure sensor and the flexible element are formed and arranged such that the flexible element is deformed by the gas overpressure within the battery cell and that the flexible element activates the switch when the predetermined overpressure within the battery cell is reached or exceeded. So, the battery arrangement may comprise two or more overpressure safety elements, wherein at least one of them comprises the flexible element and the switch. The other overpressure elements may comprise the first and/or second burst discs.

The above features, advantages and/or effects of the battery cell may be transferred to the above battery arrangement. Therefore, a repetition of these features, advantages and/or effects is omitted and it is referred to the above explanations only in order to provide a concise description.

According to an embodiment, the switch is configured for generating the safety signal when the switch is activated.

According to an embodiment, the battery arrangement comprises the controller which is communicatively coupled to the switch and which is configured for activating at least one safety measure when receiving the safety signal from the switch.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 schematically shows an exemplary embodiment of a battery cell;
Fig. 2 schematically shows an exemplary embodiment of a battery arrangement;
Fig. 3 schematically shows a detailed cross-sectional view of an exemplary embodiment of an overpressure safety element in a first state;
Fig. 4 schematically shows the overpressure safety element of figure 3 in a second state;
Fig. 5 schematically shows a detailed cross-sectional view of an exemplary embodiment of an overpressure safety element in a first state;
Fig. 6 schematically shows the overpressure safety element of figure 5 in a second state;
Fig. 7 schematically shows an exemplary embodiment of a battery cell;
Fig. 8 schematically shows an exemplary embodiment of a battery cell;
Fig. 9 schematically shows an exemplary embodiment of a battery cell;
Fig. 10 schematically shows a first side view of an exemplary embodiment of a battery arrangement;
Fig. 11 schematically shows a second side view of the battery arrangement shown in figure 10;
Fig. 12 schematically shows a third side view of the battery arrangement shown in figure 10.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

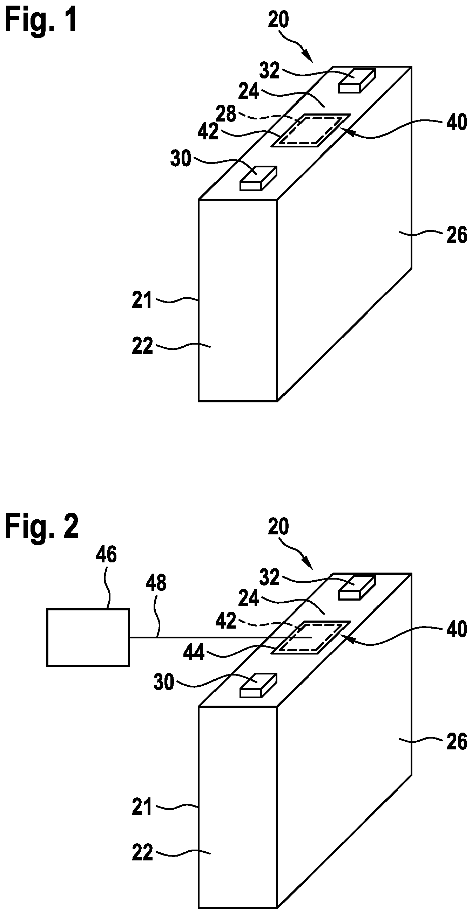

Fig. 1 schematically shows an exemplary embodiment of a battery cell 20, e.g. a high-performance battery cell 20. For example, the battery cell 20 may be used for driving a car, a train, a subway, a bus, etc. The high-performance battery cell 20 may have a nominal capacity between 15 Ah and 1.000 Ah. The nominal capacity may be between 20 Ah and 500 Ah, e.g. between 25 Ah and 100 Ah. The battery cell 20 may comprise a cell housing 21 and at least two electrical terminals, in particular a first electrical terminal 30 and a second electrical terminal 32. The electrical terminals 30, 32 may be arranged at opposing sides or at the same side of the cell housing 21. The electrical terminals 30, 32 may correspond to the poles of the battery cell 20. For example, one of the electrical terminals 30, 32 may correspond to the plus-pole and the other one of the electrical terminals 30, 32 may correspond to the minus-pole of the battery cell 20.

The cell housing 21 may comprise a first side 22, a second side 24, and a third side 26. The first side 22 may be smaller than the second side 24, and the second side 24 may be smaller than the third side 26. Optionally, the cell housing 21 may have a prismatic shape. For example, the cell housing 21 may have a cuboid shape.

The cell housing 21 may comprise a through-recess 28, e.g. at the second side 24. Alternatively, the through-recess 28 may be arranged at another side of the cell housing 21. The through-recess 28 may be configured for releasing gas from inside of the cell housing 21.

The battery cell 20 comprises at least one overpressure safety element 40. The overpressure safety element 40 may comprise an overpressure sensor. The overpressure sensor may comprise a flexible element, e.g. a flexible membrane 42, being arranged at the cell housing 21. The flexible element may tightly cover the through-recess 28. The flexible element may be gas tightly arranged at a rim of the through-recess 28. When an internal gas pressure within the cell housing 22 increases, the flexible element may be bulged outwardly. The overpressure sensor may further comprise a switch 44 (see figure 2).

Fig. 2 schematically shows an exemplary embodiment of a battery arrangement. The battery arrangement comprises one or more battery cells 20. The battery cells 20 of the battery arrangement may widely correspond to the above battery cell 20.

The battery arrangement comprises the overpressure sensor, in particular the switch 44 and the flexible element, e.g. the flexible membrane 42. The switch 44 may be arranged outside of the cell housing 21. The switch 44 may be coupled or couplable to the flexible element. The switch 44 and the flexible element may be formed and arranged such that the flexible element may be deformed by a gas overpressure within the battery cell 20, in particular the cell housing 21, and that the deformed flexible element may activate the switch 44 when a predetermined overpressure within the battery cell 20 is reached or exceeded. In other words, the flexible element may be configured for being bulged out by the internal gas pressure such that the flexible element may activate the switch 44 when the predetermined gas pressure is reached or exceeded. The switch 44 may be configured for generating a safety signal upon being activated. The reasons for the bulging of the flexible element and thereby the triggering of the switch 44 may be a cell gassing and/or an internal pressure increase due to an excessive battery cell ageing or an abuse case like thermal runaway.

The battery arrangement may comprise a controller 46 which may be communicatively coupled to the switch 44. The controller 46 may be configured for activating at least one safety measure when receiving the safety signal from the switch 44. The switch 44 may be coupled to the controller 46 via one or more electric lines 48. The safety measure may e.g. comprise a shutdown of a device supplied with energy by the battery arrangement, in particular the battery cell 20, and/or electrically separating the battery arrangement, in particular the battery cell 20, from the device and/or from other battery cells 20 of the battery arrangement, if any.

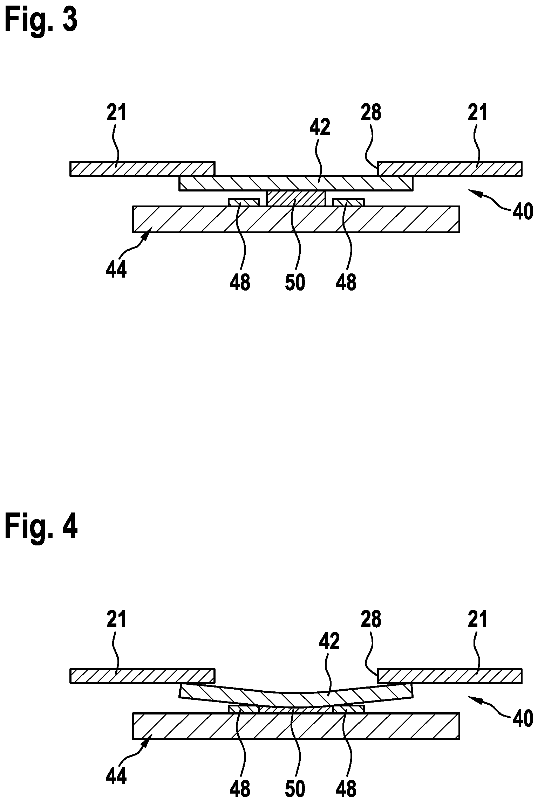

Fig. 3 schematically shows a detailed cross-sectional view of an exemplary embodiment of an overpressure safety element 40 in a first state. In particular, figure 3 may show a detailed cross-sectional view of the above overpressure safety element 40 in the first state. The overpressure safety element 40 may comprise the flexible element and the switch 44, wherein in this embodiment the flexible element may be the flexible membrane 42.

In the first state, a pressure of a gas within the cell housing 21 may be in a normal operating region and no critical overpressure of the gas may be present within the cell housing 21. Therefore, the flexible membrane 42 may be flat.

The switch 44 may comprise or consists of a glued or sticked sensor with a pressure sensitive and/or conductive electric contact 50 between the two signal or electric lines 48. Then, the switch 44 may be activated in case of a flattening of the middle pressure sensitive and/or conductive electric contact 50 to short the electric lines 48. The short may be detected by the controller 46, wherein the corresponding voltage or current may form the safety signal generated by the switch 44. Alternatively, another kind of switch 44, e.g. a conventional button or a touch sensitive sensor, may be arranged and configured for being activated by the flexible membrane 42 and for generating the safety signal upon being activated.

As an alternative to the through-recess 28 and the flexible membrane 42, the flexible element may comprise or consist of a thinned and/or stamped portion of the cell housing 21, e.g. similar to a conventional burst disc but a little bit more robust. The thinned and/or stamped portion may be configured for being bulged out, but e.g. not to burst, if the predetermined gas pressure within the cell housing 21 is reached or exceeded, such that the bulged out thinned and/or stamped portion may activate the switch 44.

Fig. 4 schematically shows the overpressure safety element 40 of figure 3 in a second state. In the second state, the pressure of the gas within the cell housing 21 may be in a critical region and a critical overpressure of the gas may be present within the cell housing 21. The critical overpressure may correspond or exceed the predetermined gas pressure. Therefore, the flexible membrane 42 may be bulged out and may activate the switch 44. In particular, the bulged out flexible membrane 42 may squeeze the electric contact 50 of the switch 44 such that the electric contact 50 may be flattened, broadened, and may short the electric lines 48.

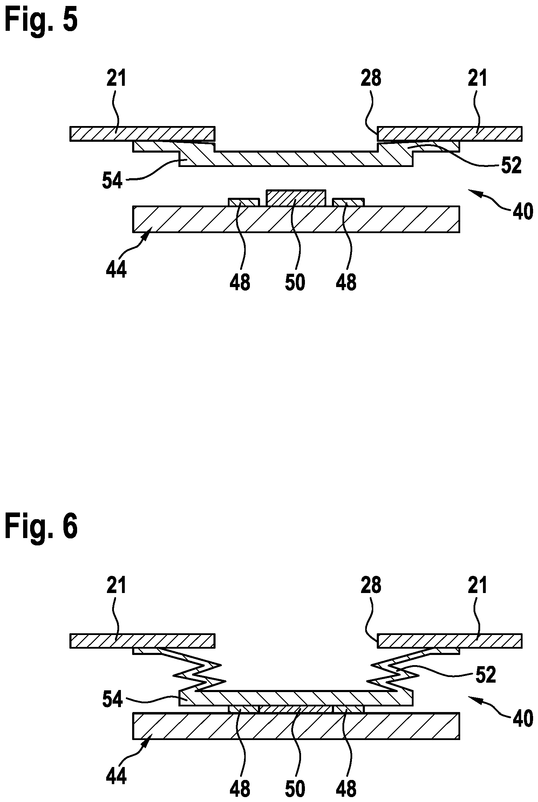

Fig. 5 schematically shows a detailed cross-sectional view of an exemplary embodiment of an overpressure safety element 40 in a first state. In particular, figure 5 may show a detailed cross-sectional view of the overpressure safety element 40 of figures 1 and/or 2 in the first state.

The overpressure safety element 40 may comprise the flexible element and the switch 44, wherein in this embodiment the flexible element may comprise or consists of bellows 52 and a cap 54, in particular the bellows 52 covered by the cap 54. The bellows 52 may be tightly coupled to the cell housing 21 at the rim of the through-recess 28 and may tightly surround the through-recess 28. The cap 54 may be tightly coupled to the bellows 52 at an end of the bellows 52 facing away from the cell housing 21 and may cover the through-recess 28.

In the first state, the pressure of the gas within the cell housing 21 may be in the normal operating region and no critical overpressure of the gas may be present within the cell housing 21. Therefore, the bellows 52 may be relaxed and flat.

The switch 44 may comprise or consists of the glued or sticked sensor with the pressure sensitive and/or conductive electric contact 50 between the two signal or electric lines 48. Then, the switch 44 may activated in case of a flattening of the middle pressure sensitive and/or conductive electric contact 50 to short the electric lines 48. The short may be detected by the controller 46, wherein the corresponding voltage or current may correspond to the safety signal generated by the switch 44. Alternatively, another kind of switch 44, e.g. a conventional button or a touch sensitive sensor, may be arranged and configured for being activated by the flexible element, e.g. the bellows 52 and/or the cap 54, and the switch 44 and for generating the safety signal upon being activated.

Fig. 6 schematically shows the overpressure safety element 40 of figure 5 in a second state. In the second state, the pressure of the gas within the cell housing 21 may be in a critical region and a critical overpressure of the gas may be present within the cell housing 21. The critical overpressure may correspond or exceed a predetermined gas pressure. Therefore, the bellows 52 may be stretched such that the cap 54 may activate the switch 44. In particular, the cap 54 may squeeze the electric contact 50 of the switch 44 such that the electric contact 50 may be flattened, broadened, and may short the electric lines 48. So, the bellows 52 and the cap 54 may be configured for being stretched by the internal gas pressure such that the cap 54 may activate the switch 44 when the predetermined gas pressure is reached or exceeded.

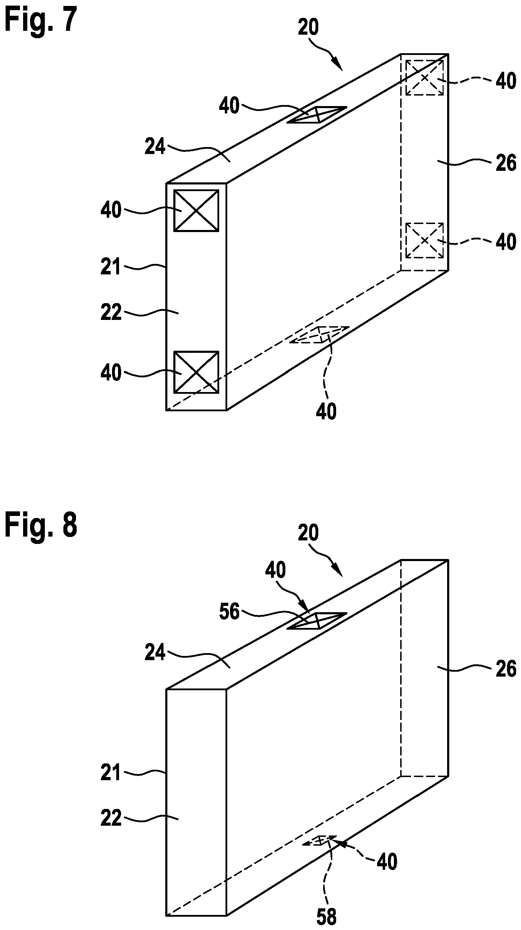

Fig. 7 schematically shows an exemplary embodiment of a battery cell 20. The battery cell 20 may widely correspond to one of the above battery cells the 20. Therefore, only those features are explained in the following in which the battery cell 20 shown in figure 7 differs from the above battery cells 20.

The battery cell 20 may comprise the at least two electrical terminals 30, 32 (not shown in figure 7), the cell housing 21 having at least two of the through-recesses 28, and at least two overpressure safety elements 40, one of them for each of the through-recesses 28. The through-recesses 28 are covered by the corresponding overpressure safety elements 40 and are therefore not visible and not shown in figure 7 and the following figures. The safety elements 40 may be arranged on one or more different sides 22, 24, 26 of the cell housing 21. Further, one, two or more of the safety elements 40 may be arranged on the same side 22, 24, 26 of the cell housing 21. Alternatively or additionally two or more of the safety elements 40 may be arranged at different heights of the battery cell 20. For each or a specified subset of the safety elements 40, the cell housing 21 may comprise one of the through-recesses 28 being covered by the corresponding overpressure safety element 40. Having multiple overpressure safety elements 40 may be especially relevant for battery cells 20 of a large capacity.

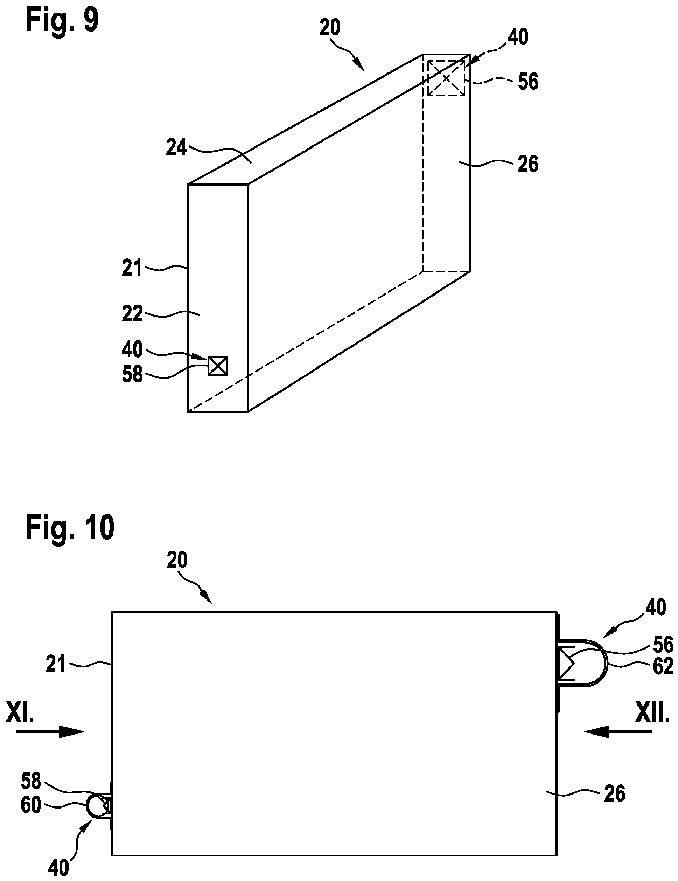

Each of the overpressure safety elements 40 may be configured for activating at least one safety measure when the predetermined overpressure is reached within the cell housing 21, wherein the safety measures are different from each other. So, the battery cell 20 provides at least two different safety measures with respect to an overpressure within the battery cell 20. One of the safety measures may be provided by the overpressure safety element 40 as explained above, in particular by the flexible element activating the switch 44. Another one of the safety measures may be to release the gas to an environment of the battery cell 20 or to a vent channel 62 (see figure 10) through one or more of the through-recesses 28, as explained below. Another one of the safety measures may be to induce an extinguishing agent into the battery cell 20 or to an extinguishing line 60 (see figure 10) through one or more of the through-recesses 28, as explained below.

Fig. 8 schematically shows an exemplary embodiment of a battery cell 20. The battery cell 20 may widely correspond to one of the above battery cells 20. Therefore, only those features are explained in the following in which the battery cell 20 shown in figure 8 differs from the above battery cells 20.

The battery cell 20 may comprise at least two overpressure safety elements 40. The overpressure safety elements 40 may be configured for causing two different safety measures if the pressure of the gas within the batteries 20 reaches or exceeds the predetermined gas pressure.

One of the overpressure safety elements 40 may comprise or consist of a first burst disc 56. The first burst disc 56 may be arranged at the second side 24 of the cell housing 21, for example. The first burst disc 56 may tightly cover the corresponding through-recess 28 which is formed within the cell housing 21. The first burst disc 56 may be configured for bursting when the predetermined gas pressure is reached or exceeded such that the gas from within the battery cell 20 may be released through the bursted first burst disc 56. The overpressure safety element 40 comprising or consisting of the first burst disc 56 may be referred to as vent of the battery cell 20.

One of the overpressure safety elements 40 may comprise or consist of a second burst disc 58 and an extinguishing line 60 (see figure 10) comprising an extinguishing agent. The second burst disc 58 may be configured for bursting when the predetermined gas pressure is reached or exceeded such that the extinguishing agent is able to enter the battery cell 20 through the bursted second burst disc 58. The extinguishing line 60 may comprise or consist of a single channel structure or a channel with an internal layed piping system for a distribution of the extinguishing agent.

The first and second burst disc 56, 58 may be arranged such that the gas exiting the battery cell 20 through the first burst disc 56 may not be mixed with the extinguishing agent entering the battery cell 20 through the second burst disc 58. For example, the first burst disc 56 may be arranged at one of the sides 22, 24, 26 of the battery cell 20 opposite to that side 22, 24, 26 of the battery cell 20 at which the second burst disc 58 is arranged. Alternatively or additionally, if the battery cell 20 is oriented as it depicted in the figures, the first burst disc 56 may be arranged at another, e.g. a higher, position as the second burst disc 58.

Optionally, if the first and second burst disc 56, 58 are arranged, the gas may be released from the battery cell 20 through the first burst disc 56 and the extinguishing agent may enter the battery cell 20 through the second burst disc 58, optionally simultaneously. Whether the first or the second burst disc 56, 58 bursts first may be configured by choosing the material and/or position at the cell housing 21 for the corresponding burst disc 56, 58. When the burst discs 56, 58 are configured for bursting simultaneously, i.e. at the same predetermined gas pressure, the gas exiting through the first burst disc 56 may not influence the extinguishing agent intruding through the second burst disc 58.

As an alternative to the first or second burst disc 56, 58 or in addition to the first and second burst disc 56, 58, there may be arranged at least one further overpressure the safety element 40 which may comprise the above flexible element (see figures 3 to 6) being arranged at the cell housing 21, e.g. tightly covering the corresponding through-recess 28 or being made from the thinned and/or stamped portion of the cell housing 21, and the above switch 44 which may be activated by the flexible element.

Optionally, if the first and/or second burst discs 56, 58 and the flexible element and the switch 44 are arranged, the safety measure may be triggered by the flexible element and the switch 44 before the gas may be released from the battery cell 20 through the first burst disc 56 and/or before the extinguishing agent may enter the battery cell 20 through the second burst disc 58. In this case, the corresponding overpressure safety element 40 may be configured such that the safety measure is triggered before the battery cell 20, the battery arrangement, and/or the device supplied with energy by the battery cell 20 may be severly damaged. If the safety measure is triggered and the overpressure still increases, the first and/or second burst discs 56, 58 may burst to prevent even more damage, as described above. In that sense, the safety element 40 or parts of it may be mechanically or electrically coupled to the extinguishing agent introducing second burst disc 58 to trigger and introduce the fire extinguishing agent at a defined safety critical status of the battery cell 20.

Fig. 9 schematically shows an exemplary embodiment of a battery cell 20. The battery cell 20 of figure 9 may widely correspond to the battery cell 20 explained with respect to figure 8. Therefore, only those features are explained in the following in which the battery cell 20 shown in figure 9 differs from the battery cell 20 shown in figure 8.

One of the overpressure safety elements 40 may be arranged at the first side 22 of the cell housing 21 and/or one of the overpressure safety elements 40 may be arranged at that the side of the cell housing 21 opposite to the first side 22 of the cell housing 21. For example, the first burst disc 56 may be arranged at that the side of the cell housing 21 opposite to the first side 22 of the cell housing 21 and the second burst disc 58 may be arranged at the first side 22 of the cell housing 21.

Fig. 10 schematically shows a first side view of an exemplary embodiment of a battery arrangement. The battery arrangement may comprise at least one of the above the battery cells 20, for example the battery cell 20 explained with respect to figure 9.

The battery arrangement may comprise the extinguishing line 60 and/ the vent channel 26. The extinguishing line 60 may be arranged such that it completely covers the second burst disc 58, wherein the second burst disc 58 may open out into the extinguishing line 60 when the second burst disc 58 bursts. The extinguishing line 60 may be filled with the extinguishing agent. The extinguishing agent may enter the battery cell 20 through the second burst disc 58 when the second burst disc 58 is bursted.

The vent channel 62 may be arranged such that it completely covers the first burst disc 56, wherein the first burst disc 56 may open out into the vent channel 62 when the first burst disc 56 bursts. The gas from the battery cell 20 may enter the vent channel 62 after the first burst disc 56 is bursted. The vent channel 62 may guide the gas away from the battery cell 20, e.g. towards the environment of the battery arrangement.

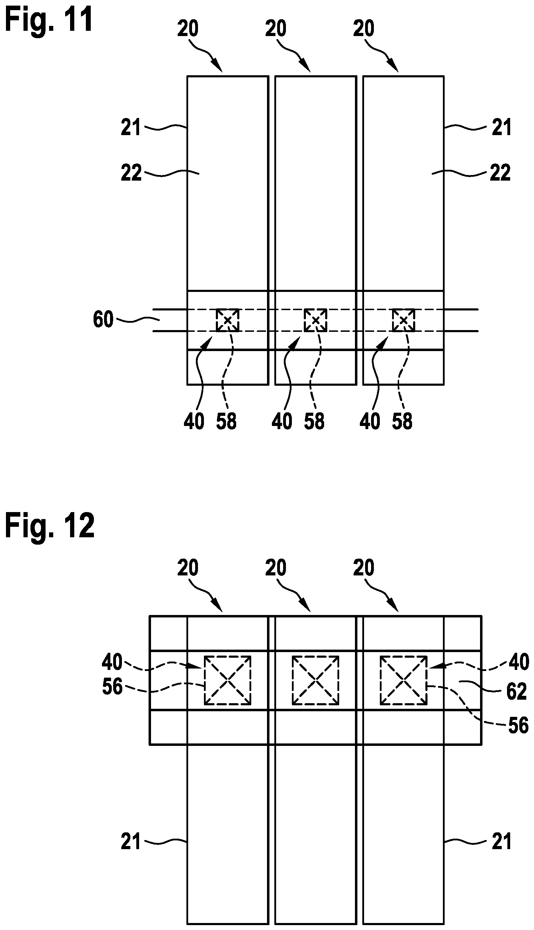

Fig. 11 schematically shows a second side view of the battery arrangement shown in figure 10. From figure 11 it may be seen that the battery arrangement comprises two or more, e.g. three, battery cells 20. The battery cells 20 may be arranged next to each other. For example, the third sides 26 of the battery cells 20 may face each other. From figure 11 it may be further seen that the second burst discs 58 of the battery cells 20 may be completely covered by the extinguishing line 60.

Fig. 12 schematically shows a third side view of the battery arrangement shown in figure 10. From figure 12 it may be seen that the first burst discs 56 of the battery cells 20 may be completely covered by the vent channel 62.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. For example, all of the above battery cells 20, configured as stand-alone battery cell, within one of the battery modules and/or within one of the battery packs 60 may be equipped with one single wear sensor 42 or with the sensor array 40 comprising at least two of the wear sensors 42. Further, as an alternative to the through-recess 28 and the flexible membrane 42, or the through-recess 28 and the bellows 52 and the cap 54, the flexible element may comprise or consist of a thinned and/or stamped portion of the cell housing 21, e.g. similar to a burst disc. The thinned and/or stamped portion may be configured for being bulged out, but e.g. not to burst, if the predetermined gas pressure within the cell housing 21 is reached or exceeded.

In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 20: battery cell
- 21: cell housing
- 22: top side
- 24: bottom side
- 26: lateral side
- 28: through-recess
- 30: first electrical terminal
- 32: second electrical terminal
- 40: overpressure safety element
- 42: flexible membrane
- 44: switch
- 46: controller
- 48: electrical line
- 50: electric contact
- 52: bellows
- 54: cap
- 56: first burst disc
- 58: second burst disc
- 60: extinguishing line
- 62: vent channel

## Claims

1. A battery arrangement, comprising:
at least one battery cell (20) comprising at least two electrical terminals (30, 32) and a cell housing (21); and
at least one overpressure sensor comprising a flexible element (42, 52, 54) being formed and/or arranged at the cell housing (21), and a switch (44) being arranged outside of the cell housing (21) and being coupled or couplable to the flexible element (42, 52, 54), wherein the switch (44) and the flexible element (42, 52, 54) are formed and arranged such that the flexible element (42, 52, 54) is deformed by a gas overpressure within the battery cell (20) and that the flexible element (42, 52, 54) activates the switch (44) when a predetermined overpressure within the battery cell (20) is reached or exceeded.

2. The battery arrangement in accordance with claim 1, wherein the cell housing (21) has at least one through-recess (28) and wherein the flexible element (42, 52, 54) tightly covers the through-recess (28).

3. The battery arrangement in accordance with claim 2, wherein:
the flexible element comprises or consists of a flexible membrane (42).

4. The battery arrangement in accordance with claim 2, wherein
the flexible element comprises or consists of bellows (52) and a cap (54),
the bellows (52) are tightly coupled to the cell housing (21) and surround the through-recess (28), and
the cap (54) is tightly coupled to the bellows (52) at an end of the bellows (52) facing away from the cell housing (21).

5. The battery arrangement in accordance with one of the preceding claims, wherein
the switch (44) is configured for generating a safety signal when the switch (44) is activated.

6. The battery arrangement in accordance with one of the preceding claims, comprising
a controller (46) which is communicatively coupled to the switch (44) and which is configured for activating at least one safety measure when receiving the safety signal from the switch (44).

7. A battery cell (20), comprising
a cell housing (21);
at least two electrical terminals (30, 32); and
at least two overpressure safety elements (40), wherein each of the overpressure safety elements (40) is configured for activating at least one safety measure when a predetermined overpressure is reached within the cell housing (21) and wherein the safety measures are different from each other.

8. The battery cell (20) in accordance with claim 7, wherein
at least one of the overpressure safety elements (40) comprises or consists of a first burst disc (56) tightly covering the corresponding through-recess (28) and being configured for bursting when the predetermined gas pressure is reached or exceeded such that the gas is released through the bursted first burst disc (56).

9. The battery cell (20) in accordance with one of claims 7 or 8, wherein
at least one of the overpressure safety elements (40) comprises or consists of a second burst disc (58) and an extinguishing line (60) comprising an extinguishing agent, and
the second burst disc (58) is configured for bursting when the predetermined gas pressure is reached or exceeded such that the extinguishing agent is able to enter the battery cell (20) through the bursted second burst disc (58).

10. The battery cell (20) in accordance with one of claims 7 to 9, wherein
at least one of the overpressure safety elements (40) comprises or consists of at least one overpressure sensor comprising a flexible element (42, 52, 54) being arranged at the cell housing (21).

11. The battery cell (20) in accordance with claim 10, wherein:
the flexible element comprises or consists of a flexible membrane (42) or predefined thinned area of the cell housing (21).

12. The battery cell (20) in accordance with claim 10, wherein
the flexible element comprises or consists of bellows (52) and a cap (54),
the bellows are tightly coupled to the cell housing (21) and surround the through-recess (28), and
the cap is tightly coupled to the bellows at an end of the bellows facing away from the cell housing (21).

13. A battery arrangement, comprising:
at least one battery cell (20) in accordance with one of claims 10 to 12; and
a switch (44) being arranged outside of the cell housing (21) and being coupled or couplable to the flexible element (42, 52, 54), wherein the overpressure sensor and the flexible element (42, 52, 54) are formed and arranged such that the flexible element (42, 52, 54) is deformed by a gas overpressure within the battery cell (20) and that the flexible element (42, 52, 54) activates the switch (44) when a predetermined overpressure within the battery cell (20) is reached or exceeded.

14. The battery arrangement in accordance with claim 13, wherein
the switch (44) is configured for generating a safety signal when the switch (44) is activated.

15. The battery arrangement in accordance with one of claims 1 to 6 or 13 or 14, comprising
a controller (46) which is communicatively coupled to the switch (44) and which is configured for activating at least one safety measure when receiving the safety signal from the switch (44).
